# EUROPEAN PATENT SPECIFICATION

(11) **EP 2 103 870 B1**
(45) Date of publication and mention of the grant of the patent: **21.12.2011**
(21) Application number: 09155626.6
(22) Date of filing: 19.03.2009
(51) Int. Cl.: F21V 14/08, F21S 8/12, F21W 101/10

(54) **Vehicle headlamp**
Fahrzeugscheinwerfer
Phare de véhicule

(30) Priority: 21.03.2008 JP 2008073045
(43) Date of publication of application: 23.09.2009
(73) Proprietor: Koito Manufacturing Co., Ltd., Tokyo 108-8711 (JP)
(72) Inventor: Yamamoto, Ippei c/o KOITO MANUFACTURING CO., LTD.,, Shizuoka-shi, Shizuoka (JP)
(74) Representative: Intès, Didier Gérard André

(56) References cited:
- EP-A1- 1 455 133
- EP-A1- 2 096 353
- EP-A2- 2 098 775
- DE-A1- 10 355 747
- US-A1- 2005 063 192
- US-A1- 2007 217 215

## Description

### FIELD OF INVENTION

Apparatuses and devices consistent with the present invention relate to vehicle headlamps having a shade which is at least partially movable to change a light distribution pattern.

### DESCRIPTION OF RELATED ART

A related art headlamp, represented by most relevant prior art US 2005/0063192 A1, includes a lamp unit having a light source and a housing in which the lamp unit is arranged.

It further includes a projection lens which forwardly projects light emitted from the light source, a reflector which reflects the light emitted from the light source toward the projection lens, and a light distribution pattern switching mechanism arranged between the projection lens and the light source. The light distribution pattern switching mechanism is configured, for example, to switch a light distribution pattern between a low beam distribution pattern adapted for close range irradiation and a high beam distribution pattern adapted for distant range irradiation.

A related art light distribution pattern switching mechanism includes a shade which shields a part of the light emitting from the light source, the shade including a fixed part (a fixed shade) and a movable part (a movable shade) which is movable between a first position, at which the movable part touches the fixed part to form a first light distribution pattern, and a second position, at which the movable part is separated from the fixed part to form a second light distribution pattern (see, e.g., JP 2007-294203 A).

In a vehicle headlamp having the related art shade described above, however, depending on processing accuracy and positional accuracy of the components, a relative position of the movable part with respect to the fixed part may become different from what was originally designed.

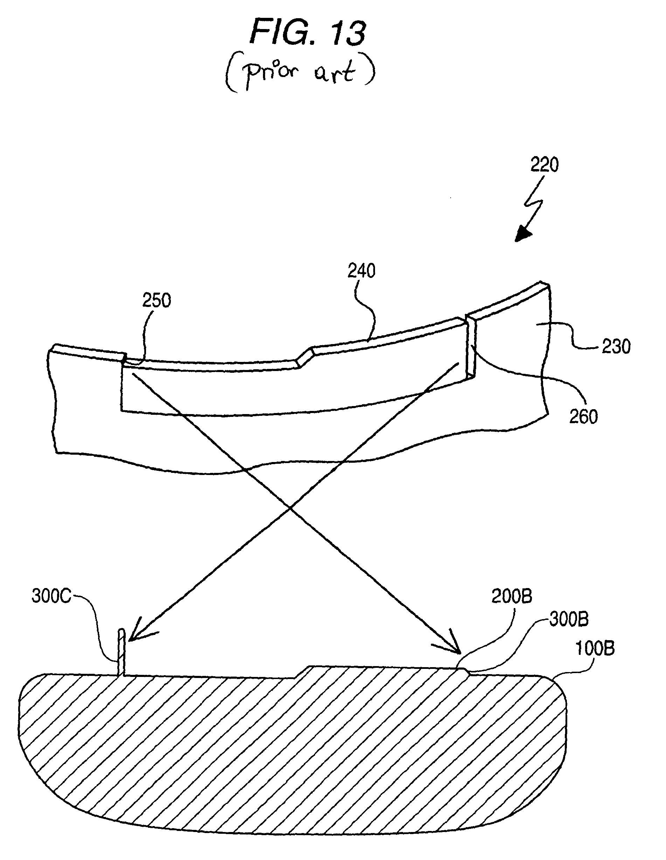

More specifically, as shown in Fig. 13 for example, if there is a level mismatch 250 or a gap 260 between the fixed part 230 and the movable part 240 of the shade 220 when the movable part 240 is moved to the first position, an unnecessary step 300B or an unnecessary protrusion 300C is created in a cutoff line 200B of a light distribution pattern 100B.

### SUMMARY OF INVENTION

Illustrative aspects of the present invention provide a vehicle headlamp which is configured such that an unintended change in a light distribution pattern due to a misalignment of a movable part and a fixed part is prevented.

According to an illustrative aspect of the present invention, a vehicle headlamp is provided with the technical features of claim 1.

Other aspects and advantages of the invention will be apparent from the following description, the drawings and the claims.

### BRIEF DESCRIPTION OF THE DRAWINGS

Fig. 1 is a schematic sectional view of a vehicle headlamp according to an exemplary embodiment of the present invention;
Fig. 2 is a perspective view of a lens holder of the vehicle headlamp of Fig. 1 and a mechanism arranged inside the lens holder;
Fig. 3 is a perspective view of a light distribution pattern switching mechanism;
Fig. 4 is a schematic plan view of an example of a shade according to a first exemplary embodiment of the present invention;
Fig. 5 is a diagram illustrating an example of a light distribution pattern;
Fig. 6 is a diagram illustrating light rays reflected by a reflector toward an upper end of a shade to form a low beam distribution pattern;
Fig. 7 is a schematic plan view of another example of the shade according to another exemplary embodiment of the present invention in which an inner face of a fixed part is more inwardly protruded than an inner face of a movable part;
Fig. 8 is a schematic plan view of yet another example of the shade according to yet another exemplary embodiment of the present invention in which the inner face of the fixed part is more inwardly protruded than the inner face of the movable part and in which an outer face of the fixed part is more outwardly protruded than an outer face of the movable part;
Fig. 9 is a schematic plan view of yet another example of the shade according to yet another exemplary embodiment of the present invention in which abutting portions of the fixed part are formed thicker than the other portions of the fixed part;
Fig. 10 is a schematic plan view of yet another example of the shade according to yet another exemplary embodiment of the present invention in which abutting portions of the movable part is formed thicker than the other portions of the movable part;
Fig. 11 is a schematic plan view of yet another example of the shade according to yet another exemplary embodiment of the present invention in which the abutting portions of the fixed part is formed thicker than the other portions of the fixed part and in which the abutting portions of the movable part are formed thicker than the other portions of the movable portion;
Fig. 12 is a diagram illustrating another example of a light distribution pattern; and
Fig. 13 is a diagram illustrating the related prior art.

### DETAILED DESCRIPTION OF EXEMPLARY EMBODIMENTS OF INVENTION

Hereinafter, exemplary embodiments of the invention will be explained with reference to the drawings. The following exemplary embodiments are examples only and do not limit the scope of the invention.

### [Exemplary Embodiment]

A headlamp 1 according to an exemplary embodiment of the present invention may be mounted either on a right side or a left side of a front portion of a vehicle body.

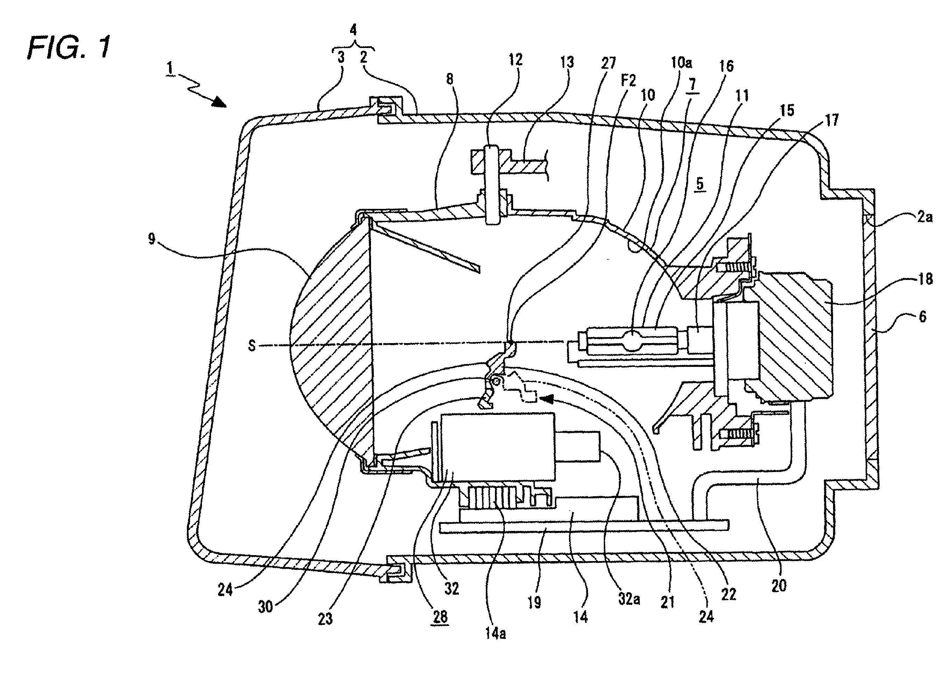

As shown in Fig. 1, the headlamp 1 includes a lamp housing 2 having an opening on a front side and a cover 3 which closes the opening of the lamp housing 2. The lamp housing 2 and the cover 3 form a lamp case 4 inside which a lamp chamber 5 is created.

A rear end portion of the lamp housing 2 is formed with an attachment hole 2a into which a back cover 6 is attached.

A lamp unit 7 is placed in the lamp chamber 5. The lamp unit 7 includes a lens holder 8, a projection lens 9 attached to a front end portion of the lens holder 8, a reflector 10 attached to a rear face of the lens holder 8, and a light source 11 attached to a rear end portion of the reflector 10.

The lamp unit 7 is supported by the lamp housing 2 via an optical axis adjustment mechanism (not shown). The optical axis adjustment mechanism is operable to vertically and/or laterally move the lamp unit 7 with respect to the lamp housing 2 in order to adjust an optical axis of light emitting from the light source 11.

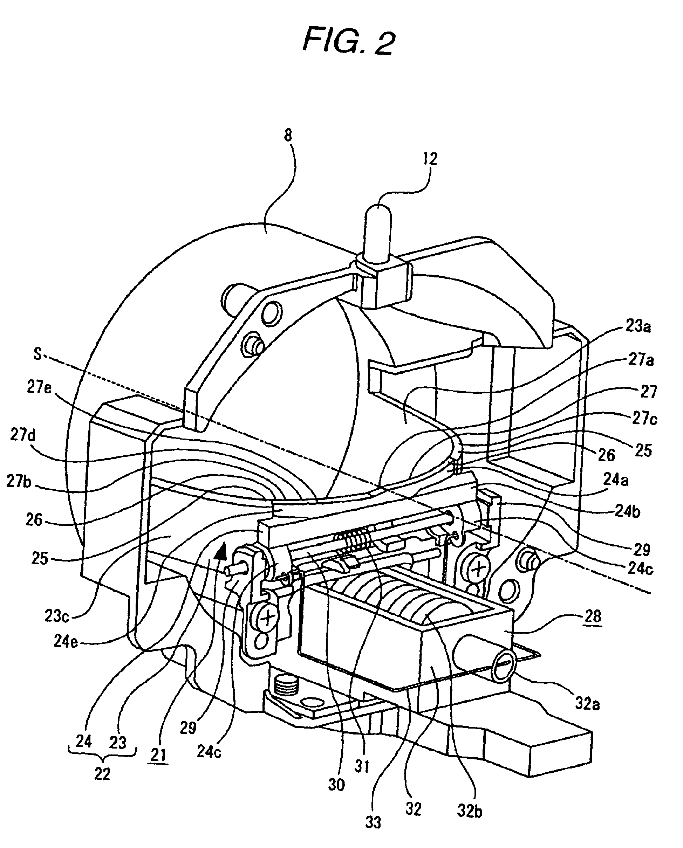

As shown in Figs. 1 and 2, the lens holder 8 is formed in a cylindrical shape having a hollow portion extending in the front and rear direction. A rotation shaft 12 is fixed to an upper end portion of the lens holder 8. The rotation shaft 12 is extended upward from the lens holder 8 and is rotatably supported by a support member 13 (see Fig. 1) which is disposed above the lens holder 8 and inside the lamp chamber 5. Therefore, the lamp unit 7 may be laterally swiveled around an axis of the rotation shaft 12 relative to the lamp case 4.

This lateral swiveling of the lamp unit 7 occurs in accordance with a steering operation of a driver.

Inside the lamp chamber 5, moreover, an actuator 14 is disposed below the lens holder 8. The actuator 14 has a coupling part 14a which is upwardly protruded from a front end portion of the actuator 14. The coupling part 14a is coupled to a lower end portion of the lens holder 8. The coupling part 14a is rotated by a drive force of the actuator 14, whereby the lamp unit 7 is laterally swiveled around the axis of the rotation shaft 12 in a direction corresponding to the rotating direction of the coupling part 14a.

The projection lens 9 includes a convex front face and a flat rear face. The projection lens 9 inverts an image on a focal plane including a rear focal point F2 and forwardly projects the inverted image.

The reflector 10 includes an inner face which is formed as a reflecting surface 10a. A portion of the reflecting surface 10a other than a front end portion of the reflecting surface 10a is formed, for example, in an ellipsoidal shape. A first focal point of the reflecting surface 10a is coincident with a light emitting part 16 of the light source 11 and a second focal point is coincident with the rear focal point F2 of the projection lens 9.

The light source 11 is, for example, a discharge bulb, and emits light from the light emitting part 16 which is provided inside an outer tube 15. A rear portion of the outer tube 15 is held by a cap 17, and a rear portion of the cap 17 is coupled to a bulb socket 18.

A lighting circuit unit 19 is arranged inside the lamp chamber 5 and on a lower side of the actuator 14. The bulb socket 18 is coupled to the lighting circuit unit 19 via a feeding cord 20. Light is emitted from the light emitting part 16 when a drive voltage is applied to the light source 11 through the feeding cord 20 by driving the lighting circuit unit 19. The light emitted from the light emitting part 16 is directed forward or is reflected by the reflecting surface 10a of the reflector 10, and is converged on the focal plane including the rear focal point F2 of the projection lens 9 to be forwardly projected through the projection lens 9 as irradiation light.

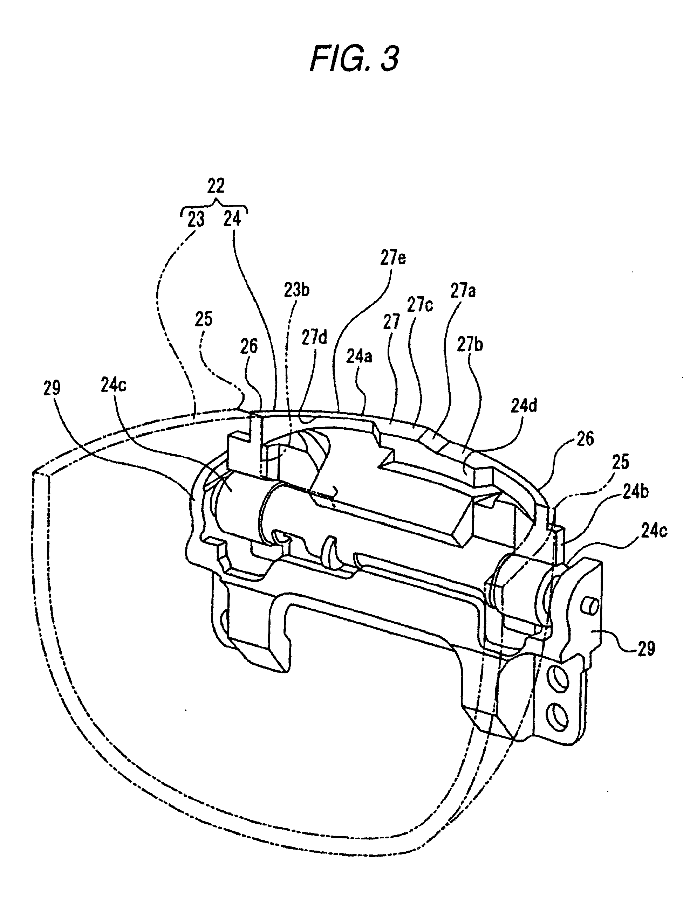

The lamp unit 7 further includes a light distribution pattern switching mechanism 21 which is disposed between the projection lens 9 and the light source 11. As shown in Figs. 2 and 3, the light distribution pattern switching mechanism 21 includes a shade 22.

The shade 22 includes a fixed part 23 and a movable part 24, and the movable part 24 is relatively rotatable with respect to the fixed part 23.

As illustrated by two-dot chain lines in Fig. 3, the fixed part 23 is formed in a shape of a semi-bowl which is upwardly and forwardly opened, and an inner face 23a of the fixed part 23 is curved. An intermediate portion of the fixed part 23, i.e. a portion between right and left portions of the fixed part 23, is formed with a cutout portion 23b which is upwardly opened.

As shown in Figs. 2 and 3, the movable part 24 includes a blocking part 24a formed in a moderate arcuate shape which is convex to the rear, a coupling part 24b contiguously formed from a lower end of the blocking part 24a to extend in right and left directions, and supported parts 24c downwardly protruding from right and left end portions of the coupling part 24b.

The movable part 24 is rotated between a first position, which is illustrated in solid lines in Fig. 1, and a second position, which is illustrated in two-dot chain lines in Fig. 1, to open or to close the cutout portion 23b of the fixed part 23 with the blocking part 24a. More specifically, the movable part 24 is rotated between the first position, at which the cutout portion 23b is closed with the blocking part 24a, and the second position, at which the cutout portion 23b is opened with blocking part 24a. When the movable part 24 at the first position, a low beam distribution pattern adapted for close range irradiation is formed by the arrangement of the fixed part 23 and the movable part 24. When the movable part 24 is rearwardly rotated from the first position to the second position, a high beam distribution pattern adapted for distant range irradiation is formed by the arrangement of the fixed part 23 and the movable part 24. That is, the low beam or the high beam is selectable by rotating the movable part 24 to the first position or to the second position.

A shown in Figs. 2 to 4, the fixed part 23 includes abutting portions 25 on right and left sides of the cutout portion 23b, and the blocking part 24a of the movable part 24 includes abutting portions 26 on right and left sides thereof. The abutting portions 26 abut on the abutting portions 25 of the fixed part 23 in a state in which the movable part 24 is at the first position. When the movable part 24 is at the first position, an inner face 24d of the movable part 24 and the inner face 23a of the fixed part 23 are arranged along the same smoothly curved surface.

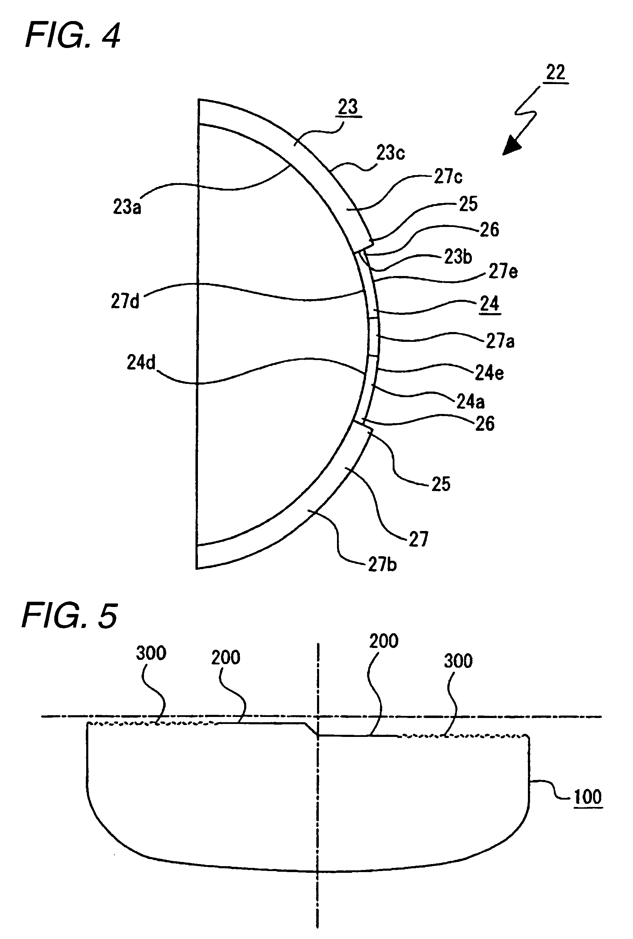

A wall thickness between a front edge and a rear edge of an upper face of the entire fixed part 23 is greater than a wall thickness between a front edge and a rear edge of an upper face of the blocking part 24a of the movable part 24. Therefore, as shown in Fig. 4, in a state in which the movable part 24 is at the first position, the inner face 24d of the movable part 24 and the inner face 23a of the fixed part 23 are arranged on the same smoothly curved surface as described above, and an outer surface 23c of the fixed part 23 protrudes more outward than an outer surface 24e of the movable part 24.

An upper end face of the shade 22 is a cutoff line forming part 27 which forms a cutoff line of the light distribution pattern. As shown in Figs. 2 and 3, the center part of the cutoff line forming part 27 in the right-and-left direction, namely, the center part in the right-and-left direction of the movable part 24 is an inclined part 27a, and a first portion 27b and a second portion 27c provided to extend in a horizontal direction from the right and left ends of the inclined part 27a respectively. The first portion 27b is disposed at a position slightly lower than the second portion 27c. The first portion 27b forms a horizontal cutoff line on the self lane side and the second portion 27c forms a horizontal cutoff line on the opposite lane side. Note that this arrangement may alternatively be reversed such that the first portion 27b is disposed at a position slightly higher than the second portion 27c and the incline of the inclined part 27a is reversed.

As shown in Fig. 2, in a state in which the movable part 24 is at the first position, the inclined part 27a of the cutoff line forming part 27 is disposed substantially on an optical axis S of the light emitted from the light source 11.

The movable part 24 is rotated by a rotation mechanism 28, which is placed on the upper face of the lower portion of the lens holder 8 (see Figs. 1 and 2). As shown in Fig. 2, the rotation mechanism 28 includes support projections 29, a supporting point shaft 30 extending in the right-and left direction, a biasing spring 31, for example a helical torsion coil spring, a solenoid block 32, and a coupling link 33 formed from a wire material.

The support projections 29 are placed on the outsides in the right-and-left direction of the supported parts 24c of the movable part 24, and are fixed to the lens holder 8.

The supporting point shaft 30 penetrates through the support projections 29 and the supported parts 24c of the movable part 24. The movable part 24 can rotate relative to the support projections 29 with the supporting point shaft 30 as a supporting point.

The biasing spring 31 is supported on the supporting point shaft 30 to bias the movable part 24 toward the first position.

The solenoid block 32 includes a drive cylinder 32a and a solenoid 32b. The drive cylinder 32a is rearwardly protruded from the solenoid block 32, and is movable back and forth. The drive cylinder 32a and the supported parts 24c of the movable part 24 are coupled through the coupling link 33.

In the rotation mechanism 28, when the drive cylinder 32a is moved forward by driving the solenoid 32b of the solenoid block 32, the movable part 24 is rotated from the first position to the second position with the supporting point shaft 30 as a supporting point. When the drive cylinder 32a is moved rearward by driving the solenoid 32b of the solenoid block 32, the movable part 24 is rotated from the second position to the first position with the supporting point shaft 30 as a supporting point.

As described above, when the light is emitted from the light source 11 in a state in which the movable part 24 is at the first position, a low beam distribution pattern is formed by the shade 22. When the light is emitted from the light source 11 in a state in which the movable part 24 is at the second position, a high beam distribution pattern is formed by the shade 22.

Since the movable part 24 is rotated by the rotation mechanism 28 relative to the fixed part 23, depending on the processing accuracy and the positional accuracy of the components, the relative position of the movable part 24 with respect to the fixed part 23, for example at the first position, may be different from what was originally designed and the accuracy and position of the components may also change over time.

The cutoff lines 200, 300 of a light distribution pattern 100 are formed by a front edge 27d or a rear edge 27e of the cutoff line forming part 27 of the shade 22 (see Fig. 5). However, as described above, the wall thickness of the fixed part 23 is greater than the wall thickness of the blocking part 24a of the movable part 24. Therefore, the cutoff lines 200 formed by the upper edges of the cutoff line forming part 27 of the movable part 24 are clearer than the cutoff lines 300 formed by the upper edges of the cutoff line forming part 27 of the fixed part 23. That is, as shown in Fig. 5, the cutoff lines 300 become blurred because the cutoff lines 300 are a combination of lines that are formed by the front edge 27d and the rear edge 27e of the fixed part 23 having the greater wall thickness.

Since the cutoff lines 200 are formed as clear lines and the cutoff lines 300 are formed as indistinct lines, if a shift of the movable part 24 relative to the fixed part 23 occurs because of a processing inaccuracy and/or a positional inaccuracy of the components, the shape of the light distribution pattern 100 is not much different as compared with a case in which no shift occurs, and change in the light distribution pattern 100 caused by a position shift of the movable part 24 relative to the fixed part 23 can be suppressed.

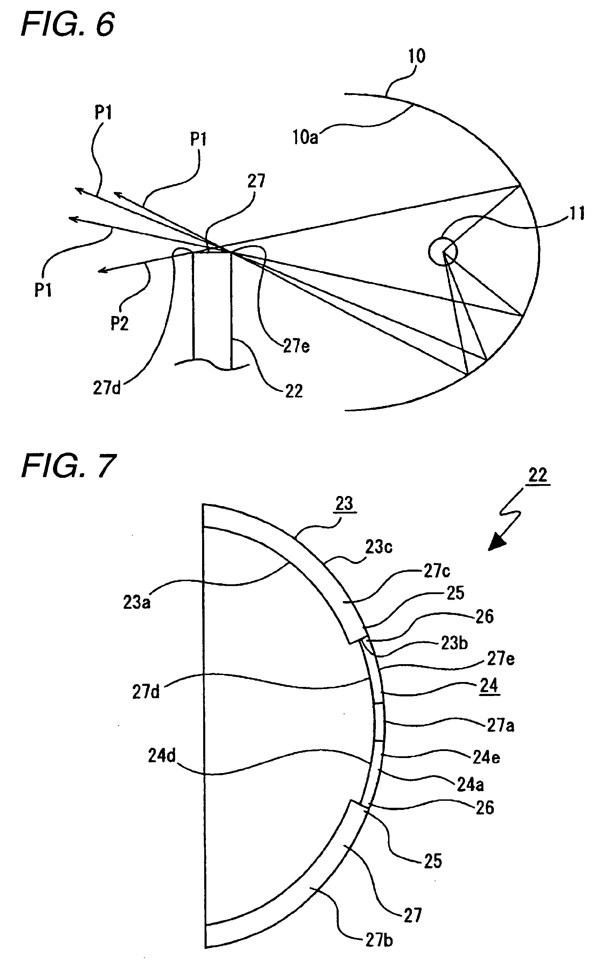

As described above, in a state in which the movable part 24 is rotated to the first position, a low beam distribution pattern is formed. As shown in Fig. 6, the low beam distribution pattern is formed by light rays P1, P2 and, more specifically, primarily by light rays P1 reflected by the reflecting surface 10a on the lower side of the reflector 10 toward the shade 22, and cutoff lines are formed primarily by the rear edge 27e of the cutoff line forming part 27 of the shade 22. In other words, the light rays P1 have a greater effect on the low beam distribution pattern than the light rays P2.

Therefore, as described above, at the first position, the inner face 24d of the movable part 24 and the inner face 23a of the fixed part 23 are arranged on the same smoothly curved surface, and the outer surface 23c of the fixed part 23 protrudes more outward than the outer surface 24e of the movable part 24, whereby the cutoff lines 300 are formed easily as more indistinct lines, and a change in the light distribution pattern 100 caused by a position shift of the movable part 24 relative to the fixed part 23 suppressed.

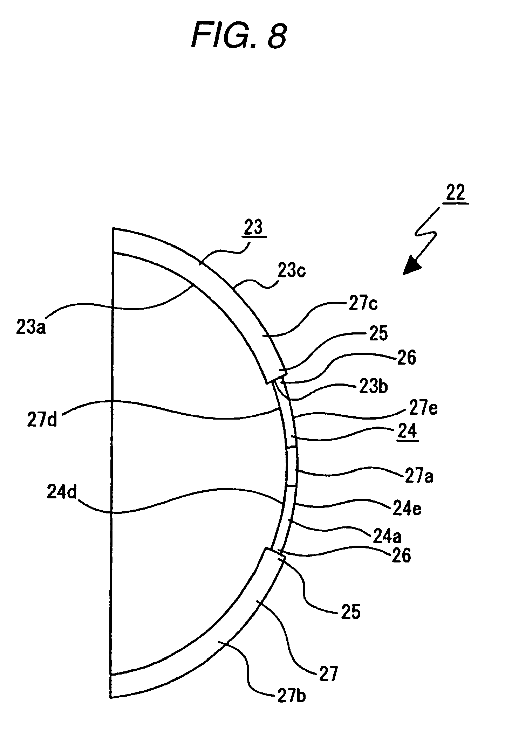

In the exemplary embodiment described above, if the thickness of the fixed part 23 is formed thicker than the thickness of the blocking part 24a of the movable part 24, the inner face 24d of the movable part 24 and the inner face 23a of the fixed part 23 are positioned on the same smoothly curved surface and the outer surface 23c of the fixed part 23 protrudes more outward than the outer surface 24e of the movable part 24 by way of example, but the positional relationship between the fixed part 23 and the movable part 24 is not limited thereto. For example, as shown in Fig. 7, the outer surface 24e of the movable part 24 and the outer surface 23c of the fixed part 23 may be positioned on the same smoothly curved surface, and the inner face 23a of the fixed part 23 may protrude more inward than the inner face 24d of the movable part 24. Alternatively, as shown in Fig. 8, the outer surface 23c of the fixed part 23 may protrude more outward than the outer surface 24e of the movable part 24, and the inner face 23a of the fixed part 23 may also protrude more inward than the inner face 24d of the movable part 24.

### [Additional Exemplary Embodiments]

In the exemplary embodiment described above, the wall thickness of the entire fixed part 23 is greater than the wall thickness of the entire blocking part 24a of the movable part 24 by way of example, but the wall thicknesses of the fixed part 23 and the movable part 24 need not be limited thereto insofar as at least one of the abutting portions 25, 26 of the fixed part 23 and the movable part 24 are formed to have a greater thickness than at least a part of a portion of the movable part 24 other than the abutting portion 26.

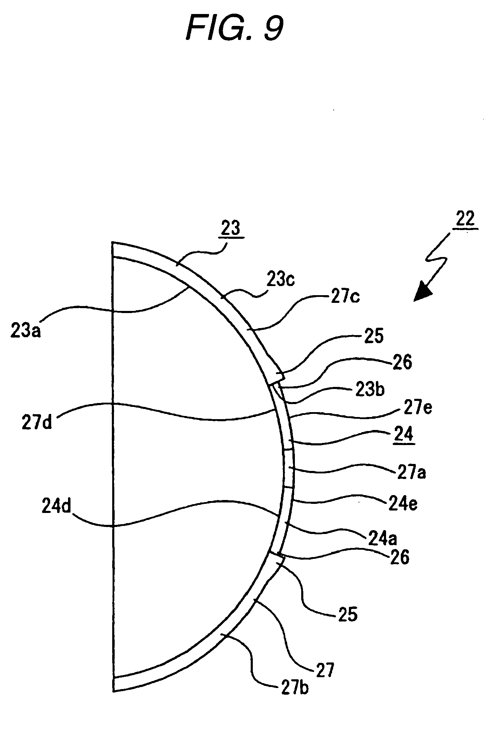

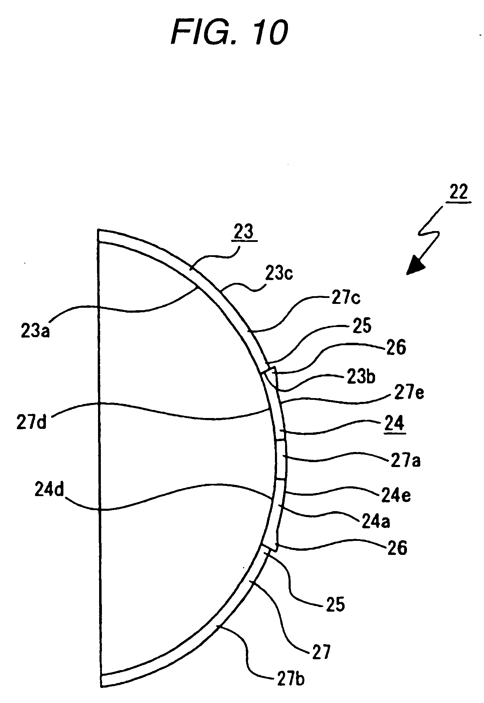

For example, as shown in Fig. 9, according to another exemplary embodiment of the present invention, the abutting portions 25 of the fixed part 23 may formed thicker than the other portions of the fixed part 23 and the movable part 24. Alternatively, as shown in Fig. 10, according to yet another exemplary embodiment of the present invention, the abutting portions 26 of the movable part 24 may be µformed thicker than any other portion of the fixed part 23 and the movable part 24. In either of the exemplary embodiments shown in Fig. 9 and 10, the positional relationship between the inner face 23a of the fixed part 23 and the inner face 24d of the movable part 24 and the positional relationship between the outer surface 23c of the fixed part 23 and the outer surface 24e of the movable part 24 are optional if the inner face or the outer face of the thicker portion protrudes inward or outward.

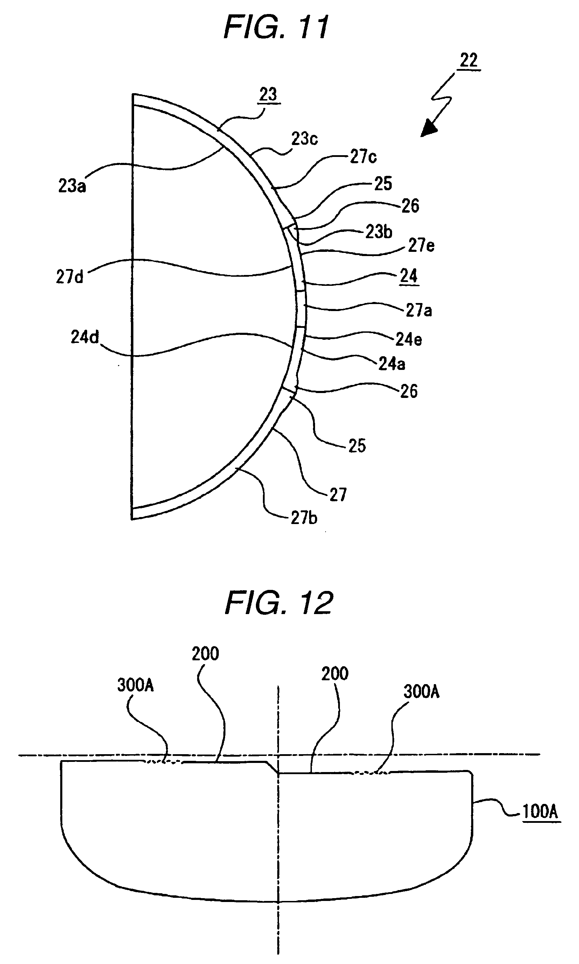

Alternatively, according to yet another exemplary embodiment of the present invention, the abutting portions 25 of the fixed part 23 and the abutting portions 26 of the movable part 24 may be formed thicker than the other portions of the fixed part 23 and the movable part 24 as shown in Fig. 11.

If the abutting portions 25 of the fixed part 23 and the abutting portions 26 of the movable part 24 are formed thicker than the other portions, as shown in Fig. 11, parts of cutoff lines 300A of a light distribution pattern 100A are formed as indistinct lines as shown in Fig. 12, and a change in the light distribution pattern 100 (100A) caused by a position shift of the movable part 24 relative to the fixed part 23 can be suppressed.

In the case in which the abutting portions 25 of the fixed part 23 and the abutting portions 26 of the movable part 24 are formed thicker than any other portion, the weight of the shade 22 is reduced and the weight of the vehicle headlamp 1 can be reduced.

As shown in Fig. 4, when the wall thickness of the entire fixed part 23 is formed thicker than the wall thickness of the entire blocking part 24a of the movable part 24 such that the wall thickness is uniform in each of the fixed part 23 and the movable part 24, processing of the shade 22 can be enhanced and made easier.

As shown in Figs. 4, 7, 8, and 9, when the wall thickness of the blocking part 24a of the movable part 24 is formed thinner than the wall thickness of the fixed part 23, the weight of the movable part 24 is reduced, so that the operation of the movable part 24 can be increased and the drive force for operating the movable part 24 can be decreased, thus extending the life of the rotation mechanism.

As shown in Fig. 3, the wall thickness of a portion of the blocking part 24a having the inclined part 27a may be varied to adjust the amount of light forming a region around the oblique part of the cutoff line. In this case, the cutoff lines 200 can be kept sharp and clear by arranging the rear edge 27e of the blocking part 24a substantially on the rear focal point F2 of the projection lens 9.

In the exemplary embodiments described above, the movable part 24 is rotated relative to the fixed part 23 by way of example, but the operation of the movable part 24 is not limited to rotation and the movable part may be operated as linear operation, for example, up and down, side to side, or back and forth.

While the present invention has been shown and described with reference to certain exemplary embodiments thereof, it will be understood by those skilled in the art that various changes in form and details may be made therein without departing from the scope of the invention as defined by the appended claims.

## Claims

1. A vehicle headlamp (1) comprising:
a projection lens (9);
a light source (11) which is disposed more rearward than a rear focal point (F2) of the projection lens (9);
a reflector (10) which reflects a light emitted from the light source (11) toward the projection lens (9); and
a shade (22) which is disposed in a region including the rear focal point (F2) of the projection lens (9) and between the light source (11) and the projection lens (9) to shield a part of the light reflected by the reflector (11),
wherein the shade (22) comprises:
a fixed part (23) comprising a first abutting portion (25); and
a movable part (24) comprising a second abutting portion (26);
wherein the movable part (24) is movable between a first position at which the second abutting portion (26) abuts on the first abutting portion (25) and a second position at which the second abutting portion (26) is separated from the first abutting portion (25),
wherein, when the movable part (24) is at the first position, a first part of the light reflected by the reflector (10) is projected forward through the projection lens (9) to form a low beam distribution pattern (100. 100A), and
when the movable part (24) is at the second position, a second part of the light reflected by the reflector (10) in addition to the first part is projected forward through the projection lens (9) to form a high beam distribution pattern, and
**characterized in that**, in a state in which the movable part (24) is at the first position, a wall thickness between a front edge (27d) and a rear edge (27e) of an upper end face (27) of at least one of the first abutting portion (25) and the second abutting portion (26) is greater than a wall thickness between a front edge (27d) and a rear edge (27e) of an upper end face (27) of at least a part of a portion of the movable part (24) other than the second abutting portion (26), and the fixed part (23) and the movable part (24) are arranged such that the front and rear edges (27d, 27e) of the upper end face (27) of the fixed part (23) and the front and rear edges (27d, 27e) of the upper end face (27) of the movable part (24) form cutoff lines (200, 300, 300A) of the low beam distribution pattern (100, 100A).

2. The vehicle headlamp (1) according to claim 1, wherein the wall thickness of the first abutting portion (25) is greater than the wall thickness of the second abutting portion (26).

3. The vehicle headlamp (1) according to claim 1 or 2, wherein the wall thickness of the first abutting portion (25) and a wall thickness between a front edge (27d) and a rear edge (27e) of an upper end face (27) of a portion of the fixed part (23) other than the first abutting portion (25) are the same, and
the wall thickness of the second abutting portion (26) and the wall thickness of the portion of the movable part (24) other than the second abutting portion (26) are the same.

4. The vehicle headlamp (1) according to any one of claims 1 to 3, wherein the wall thickness of the second abutting portion (26) is greater than the wall thickness of the first abutting portion (25).

5. The vehicle headlamp (1) according to anyone of claims 1 to 4, wherein the wall thickness of the first abutting portion (25) and the wall thickness of the second abutting portion (26) are greater than the wall thickness of said at least a part of the portion of the movable part (24) other than the second abutting portion (26).

6. The vehicle headlamp (1) according to any one of the preceding claims, wherein, when the movable part (24) is at the first position, the front edge (27d) of the first abutting portion (25) and the front edge (27d) of the second abutting portion (26) are arranged so as to he flush with each other.

7. The vehicle headlamp (1) according to any one of the preceding claims, wherein, when the movable part (24) is at the first position, the shade (22) forms a semi-bowl shape, and
when the movable part (24) is at the first position, at least a part of an inner face (23a) of the fixed part (23) and at least a part of an inner face (24d) of the movable part (24) are arranged so as to be flush with each other.

8. The vehicle headlamp (1) according to claim 1, wherein one of the cutoff lines (200, 300, 300A) of the low beam distribution pattern (100, 100A) is a stepped cutoff line (200) which is formed primarily by the rear edge (27e) of the portion of the movable part (24) other than the second abutting portion (26).

9. The vehicle headlamp (1) according to any one of the preceding claims, wherein the movable part (24) rearwardly rotates to move from the first position to the second position.

10. The vehicle headlamp (1) according to any one of the preceding claims, further comprising:
a rotation mechanism (28) comprising:
two support projections (29) which are coupled to outer sides, respectively, of the movable part (24);
a supporting point shaft (30) which is rotatably attached to the two support projections (29) and about which the movable part (24) rotates;
a biasing spring (31) which biases the movable part (24) toward the first position;
a solenoid block (32) which provides drive power to move the movable part (24) between the first and second positions; and
a coupling link (33) which couples the solenoid block (32) to the movable part (24).

## Patentansprüche

1. Fahrzeugscheinwerfer (1), umfassend:
eine Projektionslinse (9),
eine Lichtquelle (11), die weiter rückwärts angeordnet ist als ein hinterer Brennpunkt (F2) der Projektionslinse (9),
einen Reflektor (10), der ein Licht reflektiert, das von der Lichtquelle (11) zu der Projektionslinse (9) gesendet wird, und
eine Blende (22), die in einem Bereich, der den hinteren Brennpunkt (F2) der Projektionslinse (9) enthält, und zwischen der Lichtquelle (11) und der Projektionslinse (9) angeordnet ist, um einen Teil des von dem Reflektor (11) reflektierten Lichts abzuschirmen,
wobei die Blende (22) umfaßt:
einen feststehenden Teil (23), der einen ersten Anschlagabschnitt (25) aufweist, und
einen beweglichen Teil (24), der einen zweiten Anschlagabschnitt (26) aufweist,
wobei der bewegliche Teil (24) zwischen einer ersten Position, in der der zweite Anschlagabschnitt (26) an dem ersten Anschlagabschnitt (25) anschlägt, und einer zweiten Position, in der der zweite Anschlagabschnitt (26) von dem ersten Anschlagabschnitt (25) getrennt ist, beweglich ist,
und wobei, wenn der bewegliche Teil (24) in der ersten Position ist, ein erster Teil des Lichts, das von dem Reflektor (10) reflektiert wird, vorwärts durch die Projektionslinse (9) projiziert wird, um ein unteres Strahlverteilungsmuster (100, 100A) zu bilden, und
wenn der bewegliche Teil (24) in der zweiten Position ist, ein zweiter Teil des Lichts, das von dem Reflektor (10) reflektiert wird, zusätzlich zu dem ersten Teil durch die Projektionslinse (9) reflektiert wird, um ein oberes Strahlverteilungsmuster zu bilden, und
**dadurch gekennzeichnet, daß** in einem Zustand, in dem der bewegliche Teil (24) in der ersten Position ist, eine Wandstärke zwischen einer Vorderkante (27d) und einer Hinterkante (27e) einer oberen Endseite (27) mindestens des ersten Anschlagabschnitts (25) oder des zweiten Anschlagabschnitts (26) größer ist als eine Wandstärke zwischen einer Vorderkante (27d) und einer Hinterkante (27e) einer oberen Endseite (27) mindestens eines Teils eines Abschnitts des beweglichen Teils (24), der nicht der zweite Anschlagabschnitt (26) ist, und daß der stationäre Teil (23) und der bewegliche Teil (24) derart angeordnet sind, daß die Vorder- und Hinterkante (27d, 27e) der oberen Endseite (27) des stationären Teils (23) und die Vorder- und Hinterkante (27d, 27e) der oberen Endseite (27) des beweglichen Teils (24) Schnittlinien (200, 300, 300A) des unteren Strahlverteilungsmusters (100, 100A) bilden.

2. Fahrzeugscheinwerfer (1) nach Anspruch 1, wobei die Wandstärke des ersten Anschlagabschnitts (25) größer ist als die Wandstärke des zweiten Anschlagabschnitts (26).

3. Fahrzeugscheinwerfer (1) nach Anspruch 1 oder 2, wobei die Wandstärke des ersten Anschlagabschnitts (25) und eine Wandstärke zwischen einer Vorderkante (27d) und einer Hinterkante (27e) einer oberen Endseite (27) eines Abschnitts des stationären Teils (23), der nicht der erste Anschlagabschnitt (25) ist, gleich sind, und
die Wandstärke des zweiten Anschlagabschnitts (26) und die Wandstärke des Abschnitts des beweglichen Teils (24), der nicht der zweite Anschlagabschnitt (26) ist, gleich sind.

4. Fahrzeugscheinwerfer (1) nach einem der Ansprüche 1 bis 3, wobei die Wandstärke des zweiten Anschlagabschnitts (26) größer ist als die Wandstärke des ersten Anschlagabschnitts (25).

5. Fahrzeugscheinwerfer (1) nach einem der Ansprüche 1 bis 4, wobei die Wandstärke des ersten Anschlagabschnitts (25) und die Wandstärke des zweiten Anschlagabschnitts (26) größer sind als die Wandstärke des mindestens einen Teils des Abschnitts des beweglichen Teils (24), der nicht der zweite Anschlagabschnitt (26) ist.

6. Fahrzeugscheinwerfer (1) nach einem der vorhergehenden Ansprüche, wobei, wenn der bewegliche Teil (24) in der ersten Position ist, die Vorderkante (27d) des ersten Anschlagabschnitts (25) und die Vorderkante (27d) des zweiten Anschlagabschnitts (26) miteinander bündig angeordnet sind.

7. Fahrzeugscheinwerfer (1) nach einem der vorhergehenden Ansprüche, wobei, wenn der bewegliche Teil (24) in der ersten Position ist, die Blende (22) eine Halbschalenform bildet und
wenn der bewegliche Teil (24) in der ersten Position ist, mindestens ein Teil einer Innenseite (23a) des stationären Teils (23) und mindestens ein Teil einer Innenseite (24d) des beweglichen Teils (24) miteinander bündig angeordnet sind.

8. Fahrzeugscheinwerfer (1) nach Anspruch 1, wobei eine der Schnittlinien (200, 300, 300A) des unteren Strahlverteilungsmusters (100, 100A) eine gestufte Schnittlinie (200) ist, die in der Hauptsache von der Hinterkante (27e) des Abschnitts des beweglichen Teils (24), der nicht der zweite Anschlagabschnitt (26) ist, gebildet ist.

9. Fahrzeugscheinwerfer (1) nach einem der vorhergehenden Ansprüche, wobei der bewegliche Teil (24) rückwärts dreht, um sich von der ersten Position zu der zweiten Position zu bewegen.

10. Fahrzeugscheinwerfer (1) nach einem der vorhergehenden Ansprüche, ferner aufweisend:
einen Drehmechanismus (28), umfassend:
zwei Stützvorsprünge (29), die jeweils mit Außenseiten des beweglichen Teils (24) gekoppelt sind,
eine Stützpunktwelle (30), die drehbar an den zwei Stützvorsprüngen (29) befestigt ist und um welche der drehbare Teil (24) dreht,
eine Vorspannfeder (31), die den beweglichen Teil (24) zu der ersten Position vorspannt,
einen Solenoidblock (32), der Antriebsleistung bereitstellt, um den beweglichen Teil (24) zwischen der ersten und der zweiten Position zu bewegen, und
ein Koppelglied (33), das den Solenoidblock (32) mit dem beweglichen Teil (24) koppelt.

## Revendications

1. Phare de véhicule (1) comprenant:
une lentille de projection (9) ;
une source de lumière (11) qui est disposée plus en arrière qu'un point focal arrière (F2) de la lentille de projection (9) ;
un réflecteur (10) qui réfléchit une lumière émise depuis la source de lumière (11) vers la lentille de projection (9) ; et
un écran (22) qui est disposé dans une région incluant le point focal arrière (F2) de la lentille de projection (9) et entre la source de lumière (11) et la lentille de projection (9) pour faire écran vis-à-vis d'une partie de la lumière réfléchie par le réflecteur (11),
dans lequel l'écran (22) comprend :
une partie fixe (23) comprenant une première portion de butée (25) ; et
une partie mobile (24) comprenant une seconde portion de butée (26) ;
dans lequel la partie mobile (24) est mobile entre une première position à laquelle la seconde portion de butée (26) vient buter contre la première portion de butée (25) et une seconde position à laquelle la seconde portion de butée (26) est séparée de la première portion de butée (25),
dans lequel, quand la partie mobile (24) est à la première position, une première partie de la lumière réfléchie par le réflecteur (10) est projetée vers l'avant à travers la lentille de projection (9) pour former un motif de distribution de faisceau bas (100, 100A), et
quand la partie mobile (24) est à la seconde position, une seconde partie de la lumière réfléchie par le réflecteur (10), en addition à la première partie, est projetée vers l'avant à travers la lentille de projection (9) pour former un motif de distribution de faisceau haut, et
**caractérisé en ce que**, dans une situation dans laquelle la partie mobile (24) est à la première position, une épaisseur de paroi entre un bord frontal (27d) et un bord postérieur (27e) d'une face terminale supérieure (27) d'une au moins parmi la première portion de butée (25) et la seconde portion de butée (26) est supérieure à une épaisseur de paroi entre un bord frontal (27d) et un bord postérieur (27e) d'une face terminale supérieure (27) d'au moins une partie d'une portion de la partie mobile (24) autre que la seconde portion de butée (26), et la partie fixe (23) et la partie mobile (24) sont agencées de telle façon que le bord frontal et le bord postérieur (27d, 27e) de la face terminale supérieure (27) de la partie fixe (23) et le bord frontal et le bord postérieur (27d, 27e) de la face terminale supérieure (27) de la partie mobile (24) forment des lignes de coupure (200, 300, 300A) du motif de distribution de faisceau bas (100, 100A).

2. Phare de véhicule (1) selon la revendication 1, dans lequel l'épaisseur de paroi de la première portion de butée (25) est supérieure à l'épaisseur de paroi de la seconde portion de butée (26).

3. Phare de véhicule selon la revendication 1 ou 2, dans lequel l'épaisseur de paroi de la première portion de butée (25) et une épaisseur de paroi entre un bord frontal (27d) et un bord postérieur (27e) d'une face terminale supérieure (27) d'une portion de la partie fixe (23) autre que la première portion de butée (25) sont les mêmes, et l'épaisseur de paroi de la seconde portion de butée (26) et l'épaisseur de paroi de la portion de la partie mobile (24) autre que la seconde portion de butée (26) sont les mêmes.

4. Phare de véhicule (1) selon l'une quelconque des revendications 1 à 3, dans lequel l'épaisseur de paroi de la seconde portion de butée (26) est supérieure à l'épaisseur de paroi de la première portion de butée (25).

5. Phare de véhicule (1) selon l'une quelconque des revendications 1 à 4, dans lequel l'épaisseur de paroi de la première portion de butée (25) et l'épaisseur de paroi de la seconde portion de butée (26) sont supérieures à l'épaisseur de paroi de ladite au moins une partie de la portion de la partie mobile (24) autre que la seconde portion de butée (26).

6. Phare de véhicule (1) selon l'une quelconque des revendications précédentes, dans lequel, quand la première partie mobile (24) est à la première position, le bord frontal (27d) de la première portion de butée (25) et le bord frontal (27d) de la seconde portion de butée (26) sont agencés de manière à être en affleurement l'un avec l'autre.

7. Phare de véhicule (1) selon l'une quelconque des revendications précédentes, dans lequel, quand la partie mobile (24) est à la première position, l'écran (22) forme une configuration en demi-bol, et
quand la partie mobile (24) est à la première position, au moins une partie d'une face intérieure (23a) de la partie fixe (23) et au moins une partie d'une face intérieure (24d) de la partie mobile (24) sont agencées de manière à être en affleurement l'une avec l'autre.

8. Phare de véhicule (1) selon la revendication 1, dans lequel l'une des lignes de coupure (200, 300, 300A) du motif de distribution de faisceau bas (100, 100A) est une ligne de coupure étagée (200) qui est formée de manière primaire par le bord postérieur (27c) de la portion de la partie mobile (24) autre que la seconde portion de butée (26).

9. Phare de véhicule (1) selon l'une quelconque des revendications précédentes, dans lequel la partie mobile (24) tourne vers l'arrière pour se déplacer de la première position à la seconde position.

10. Phare de véhicule (1) selon l'une quelconque des revendications précédentes, comprenant en outre :
un mécanisme de rotation (28) comprenant :
deux projections de support (29) qui sont couplées à des côtés extérieurs, respectivement, de la partie mobile (24) ;
un axe de point de support (30) qui est attaché en rotation aux deux projections de support (29) et autour duquel la partie mobile (24) est en rotation ;
un ressort de sollicitation (31) qui sollicite la partie mobile (24) vers la première position ;
un bloc solénoïde (32) qui fournit une puissance d'entraînement pour déplacer la partie mobile (24) entre la première et la seconde position ; et
un lien de couplage (33) qui couple le bloc solénoïde (32) à la partie mobile (24).
